# EUROPEAN PATENT SPECIFICATION

(11) **EP 2 944 487 B1**
(45) Date of publication and mention of the grant of the patent: **04.04.2018**
(21) Application number: 15166398.6
(22) Date of filing: 05.05.2015
(51) Int. Cl.: B60H 1/00, F24F 13/20

(54) **LIGHT WEIGHT HVAC MODULE**
LEICHTGEWICHTIGES HLK-MODUL
MODULE DE CHAUFFAGE, VENTILATION ET CLIMATISATION LÉGER

(30) Priority: 15.05.2014 US 201414278233
(43) Date of publication of application: 18.11.2015
(73) Proprietor: MAHLE International GmbH, 70376 Stuttgart (DE)
(72) Inventor: Fraser, Steven R., Buffalo, NY New York 14222 (US)
(74) Representative: BRP Renaud & Partner mbB Rechtsanwälte Patentanwälte Steuerberater

(56) References cited:
- EP-A2- 1 097 828
- DE-A1- 10 042 654
- DE-U1- 8 607 997

## Description

### TECHNICAL FIELD

The present invention relates to a Heating, Ventilation, and Air-conditioning (HVAC) module for a motor vehicle according to the preamble of claim 1.

### BACKGROUND OF THE INVENTION

Heating, Ventilation, and Air Conditioning (HVAC) modules are designed to condition and deliver air in support of vehicle interior comfort and convenience. A typical HVAC module includes an air inlet for drawing in unconditioned air, a labyrinth of passageways for directing air flow throughout the HVAC module, heat exchanger assemblies for conditioning the air, and an air outlet for distributing the conditioned air to the passenger compartment of the vehicle. Air flow doors are positioned at strategic junctions through the passageways in order to selectively direct and proportion an amount of air flow to the heat exchangers within the HVAC module to control the temperature of the air flow to the passenger compartment. The heat exchangers may include a heater core for heating the air flow and an evaporative for cooling the air flow. Air flow is induced through the HVAC module by a blower that may be integrated with the HVAC module.

The current practice for automotive HVAC module design and manufacture is to use plastic injection molded panels to create a hard shell or housing for the HVAC module. These molded panels are generally made of polypropylene with filler material, usually talc. The individual hard panels are usually assembled and joined with mechanical fasteners such as screws and/or spring clips to form the HVAC module housing. There are also designs that incorporate ultrasonically and/or heat welded joints to join the panels together to form the housing of the module. In some designs various forms of integral snap features are used to join the plastic panels together.

The module housing also defines the internal passageways and mounting points for the heat exchangers, control valve modules for controlling and directing air flow to the desired outlets, control valve gearing, and other associated components. Electrical or mechanical actuators are attached to the module housing to move the internal valves to desired positions. Various air seals are applied to the plastic module housing to prevent air leakage where the module housing interfaces with distribution ducts, the front of dash air inlet plenum or the firewall opening through which passes the engine coolant, and refrigeration hoses. In addition, a blower motor assembly may be mounted to the module housing to blow air through the module that is routed in from outside the vehicle to provide fresh air or routed in from the vehicle interior to improve heating or cooling efficiency.

The module housing is required to be sufficiently robust to provide the structural strength required to bear the load of the heat exchanges, valve modules, and other associated components, as well as being sufficiently rigid to prevent undesired flexing, which create air leaks resulting in desirable noises and reduced performance of the HVAC system. In other words, the module housing is the structural member to which the heat exchangers, valve modules, and other associated components are attached. The required structural strength and rigidity of the module housing results in a module housing that is bulky, heavy, and complex to manufacture. An example of such a module housing is know from DE 100 42 654 A1.

It is desirable to have a HVAC module that requires less material and is simpler to manufacture. It is further desirable to have a HVAC module that is lighter than known HVAC modules, but yet is more robust than current HVAC modules.

### SUMMARY OF THE INVENTION

The present invention relates to a Heating, Ventilation, and Air Conditioning (HVAC) module having an internal support structure and a non-load bearing module housing defined by a preformed sheet of material having a plurality of contoured panels configured in a predetermined pattern, wherein that the contoured panels are folded along adjacent edges onto the support structure.

The internal support structure may include a first heat exchanger, a second heat exchanger spaced from the first heat exchanger, and a plurality of rigid cross-members interconnecting the first exchanger and the second heat exchanger to define a rigid internal support structure. The internal support structure may include indexing features to locate and fix the contoured panels into predetermined position onto the internal support structure.

The contoured panels may be formed from a sheet of light weight polymer foam material and may be integrally connected by living hinges, thereby enabling the contoured panels to be folded and repositioned in adjacent contact with one another to form the module housing. The contoured panels cooperate with the internal support structure and air valve module to define an air inlet, internal air passageways, at least one mixing chamber, and an air outlet. The contoured panels may be affixed to the internal support structure by means such as riveting, or gluing.

Further features and advantages of the invention will appear more clearly on a reading of the following detailed description of an embodiment of the invention, which is given by way of non-limiting example only and with reference to the accompanying drawings.

### BRIEF DESCRIPTION OF DRAWINGS

This invention will be further described with reference to the accompanying drawings in which:
Fig. 1 shows an isometric front quarter view of an exemplary embodiment of the HVAC module of the current invention.
Fig. 2 shows an isometric exploded rear quarter view of the HVAC module of Fig. 1.
Fig. 3 shows an isometric partial exploded rear quarter view of the HVAC module of Fig. 1.
Fig. 4 shows an isometric rear quarter view of the HVAC module Fig. 1.
Fig. 5 shows a cross sectional side view of the HVAC module along line 5-5 of Fig. 4.

### DESCRIPTION OF THE PREFERRED EMBODIMENT

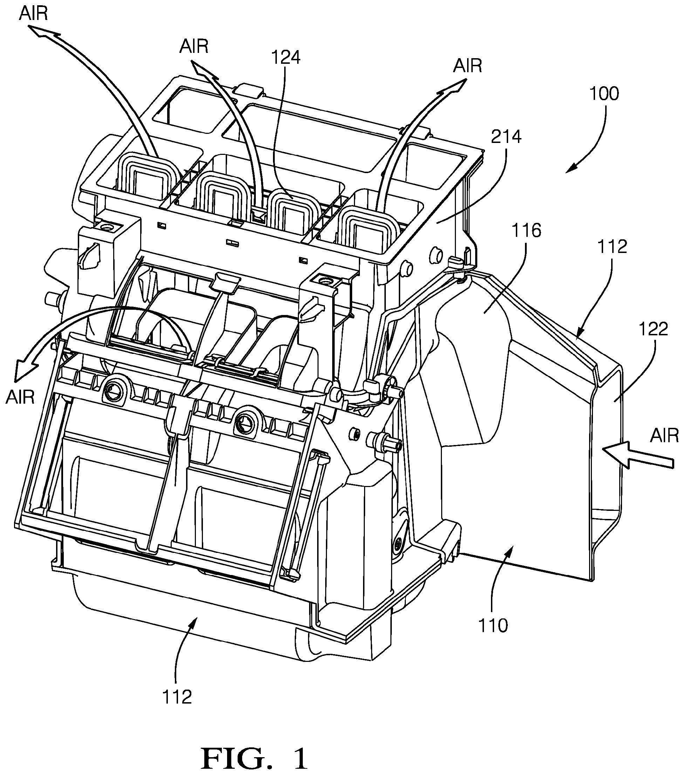

Referring to Figs. 1 through 5, shown is a light weight Heating, Ventilation, and Air Conditioning (HVAC) module 100. The HVAC module 100 employs a preformed sheet 110 of light weight polymer based material having a plurality of contoured panels 112 configured to cooperate with an internal support structure 200 to provide a non-load bearing module housing 116. Unlike HVAC modules known in the art, the present HVAC module 100 does not need to rely on the structural strength of the module housing 116 to support the internal components. In contrast, the present HVAC module 100 relies on the inherent structural strength of the internal components, such as the heat exchangers 210, 212 and, in part, on the air valve module 214, to support and maintain the shape of the module housing 116. In other words, the present module housing 116 is a non-load bearing structure that relies on the internal support structure 200 of the HVAC module 100 to maintain the structural integrity of module housing 116.

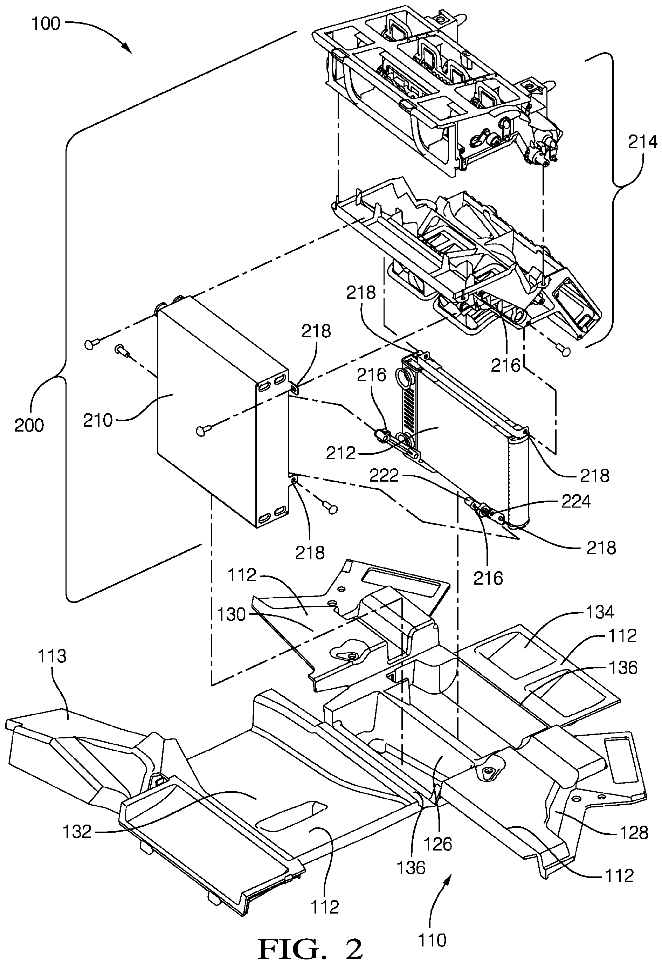

Shown in Fig. 1 is a front quarter view of the exemplary embodiment of the HVAC module 100 of the present invention. Shown in Fig. 2 is an exploded view of the HVAC module 100 of Fig. 1. A preformed sheet 110 of light weight polymer material having a plurality of contoured panels 112 is folded onto and attached to an internal support structure 200 to define the module housing 116 having an exterior shell 114, interior passage ways 118, and mixing chambers 120. The module housing 116 also defines an air inlet 122 and cooperates with an air vent module 214 to define an air outlet 124. The preformed sheet 110 is sufficiently robust to maintain the shape of the module housing 116 under normal operating conditions of the HVAC module 100, but does not need to bear the load of the internal components of the HVAC module 100, such as the heat exchangers 210, 212 or air valve modules 214. The preformed sheet 110 may be manufactured from a light weight polymer material such as polyurethane, ethylene-vinyl acetate, or polyvinyl chloride foam sheets. The preformed sheet 110 may be attached to the internal support structure 200 by mechanical means such as riveting, or by chemical means such as gluing.

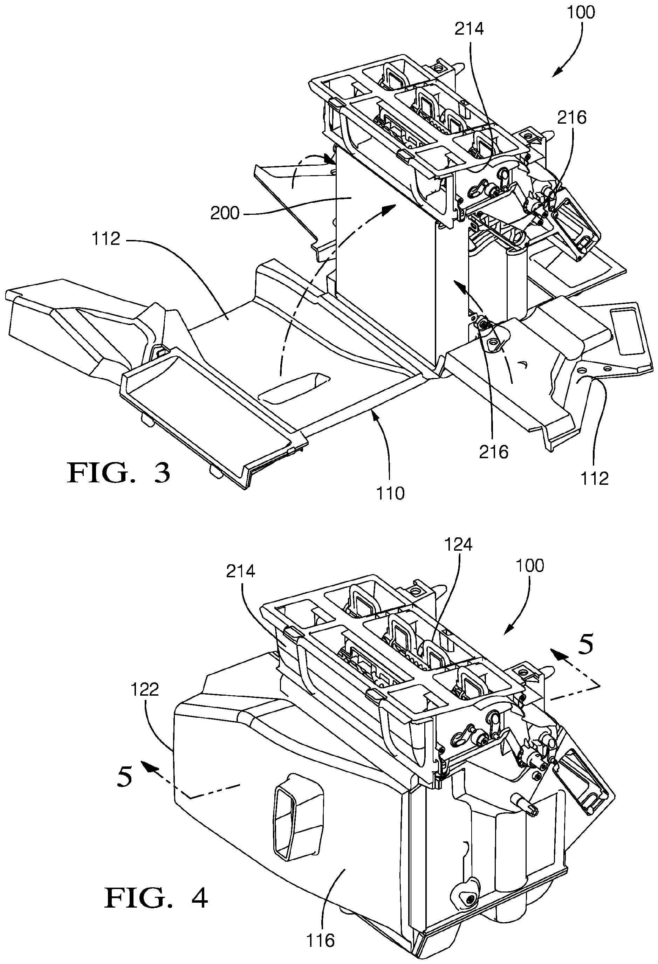

The preformed sheet 110 includes a plurality of contoured panels 112 interconnected along their adjacent edges 136. As an example, the preformed sheet 110 may include five (5) distinct primary contoured panels 112, which will constitute a bottom wall portion 126, a right side wall portion 128, a left side wall portion 130, a rear wall portion 132, and a front wall portion 134. The preformed sheet 110 may also include secondary contoured panels 113 extending from the primary contoured panels 112, in which the secondary contoured panels 113 are configured to cooperate with the internal support structure 200 and primary contoured panels 112 to define the internal air passageways 118, mixing chambers 120, or inlets/outlets 122, 124 of the HVAC module 100. The adjacent contoured panels 112, 113 are commonly joined or integrally connected by adjacent edges 136 defining living hinges, enabling the contoured panels 112 to be bent along the line of the hinges and repositioned in adjacent contact with one another to form a three-dimensional module housing 116 as shown in Fig. 4. The living hinge shown is a thin flexible hinge made from the same material as the contoured panels 112 that it connects, thereby enabling the contour panels to be molded from the same polymer material.

The preformed sheets 110 may be stamped, molded, or otherwise formed from one or more sheets of source material or, alternatively, injection molded into the net shape as illustrated in Fig. 2. The configurations, such as the layout and shape, of the individual contoured panels 112, 113 are defined by the desired external shape of the module housing 116, the location of the mounting points 218 of the internal support structure 200, the desired route of the internal passageways 118, and the desired positions of the air inlet 122 and air outlet 124. The mounting points 218 of the internal support structure 200 behave as indexing features such that the contoured panels 112, 113 have corresponding features that locate and affix onto the mounting points 218 to ensure the contoured panels 112 are properly located and fixed onto the internal support structure 200.

The main portion of the internal support structure 200 is defined by a first heat exchanger 210 fixably interconnected to a second heat exchanger 212 that is spaced apart from the first heat exchanger 210. Optionally, the heat exchangers 210. 212 may be fixably interconnected to an air valve module 214 for increase torsional rigidity and strength. The first heat exchanger 210 may be that of a heater core and the second exchanger 212 may be that of an evaporator. The exemplary first 210 and second heat exchangers 212 shown have rectangular profiles, which are typical of heat exchangers 210, 212 used in motor vehicles. Each of the heat exchangers 210 may be assembled from a plurality of tubes, with fins connecting adjacent tubes, and brazed together into a solid integral structure. The heat exchangers 210, 212 are integrally connected and fixed together with a plurality of cross members 216 to form the structurally rigid internal support structure 200.

A valve module 214 may be mounted across the pair of integrally connected heat exchangers 210, 212 to define the outlet 124 of the HVAC module 100. The valve modules 214 includes a plurality of air valves, such as flapper valves, rotary door valves, butterfly valves, or the likes and associated gearing for operating the air valves. The air valve module 214 may be actuated to direct air exiting the HVAC module 100 to the desired final destination within the cabin of the vehicle, such as the foot wells, windshield, or toward the passengers. The HVAC module 100 may also include a plurality of internal air valves which would direct and selectively proportion the incoming air through the core of the first heat exchanger 210, the core of the second heat exchanger 212, or both. The valve module 214 may also be used as a cross member 216 to fixably connect the first heat exchanger 210 to the second heat exchanger 212. The main body of the valve module 214 may be molded from any known structural plastic known in the art.

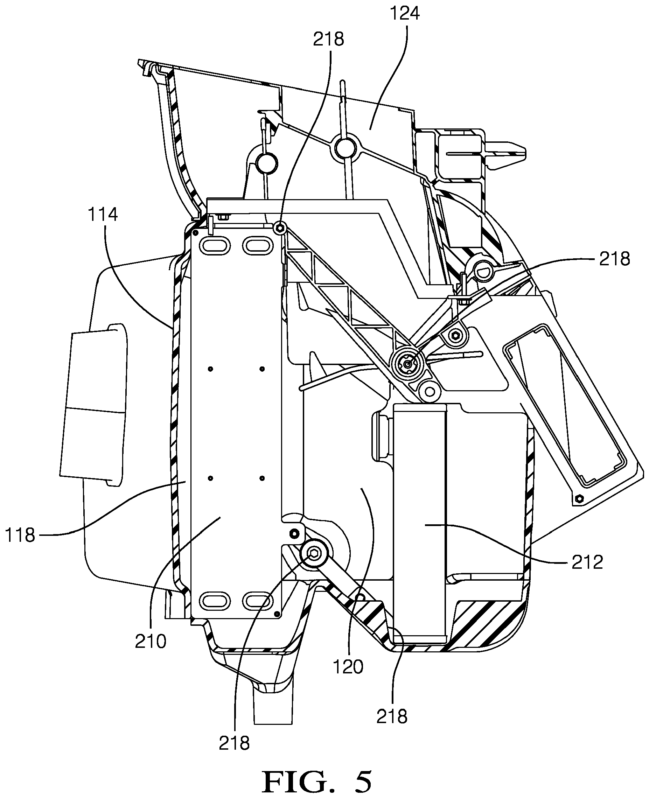

Best shown in Figs. 2 and 5, each of the heat exchangers 210, 212 includes two opposing ends. With respect to the positions of the heat exchangers 210, 212 on the drawings, located on lower and upper portions of each of the opposing ends of the heat exchangers 210, 212 are mounting points 218 defined by protruding tabs 218. The cross members 216 may be that of elongated members 216 having a first end 222 and an opposite second distal end 224. The lengths of the cross members 216 are selected to maintain the two heat exchangers 210, 212 at a predetermined fixed distance. The first end 222 of the cross members 216 fixably engage the first heat exchanger 210 and the second end 224 fixably engages the second heat exchanger 212. The cross members 216 may be connected to the heat exchangers 210, 212 by any known methods in the art, such as welding, brazing, gluing, bolting, or riveting as shown in Fig. 2. The cross members 216 may be formed of stamped, extruded, molded, metal or plastic, as long that it possesses sufficient strength, rigidity, and structural stability to maintain the two heat exchangers 210 in a fixed position to define a solid internal support structure 200. In the alternative, the cross members 216 may be formed as part of the valve module 214 assembly, in which case the cross members 216 are integrally molded into the valve module 214, as shown in Figs. 2 and 5.

Shown in Fig. 5 is a cross sectional view of the HVAC module 100, taken along line 5-5 of Fig. 4, having an internal support structure 200 defined by two spaced apart heat exchangers 212, 214 interconnected with a pair of lower cross members 216 and by a valve module 214 having upper cross members 216 molded in. The exterior shell 114, interior passageways 118, and mixing chambers 120 are defined by the preformed sheet 110 cooperating with the internal support structure 200. A mixing chamber is defined between the two heat exchangers 210, 212, valve module 214, and preformed sheet 110.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the intentions without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A Heating, Ventilation, and Air Conditioning (HVAC) module (100) comprising:
a module housing (116) defined by a preformed sheet (110) of material having a plurality of contoured panels (112) configured in a predetermined pattern, wherein said contoured panels (112) are folded along adjacent edges (136),
**characterized in that**
the HVAC module (100) further comprises an internal support structure (200) onto which said contoured panels (112) are attached.

2. The HVAC module (100) of claim 1, wherein said internal support structure (200) comprises:
a first heat exchanger (210);
a second heat exchanger (212) spaced from the first heat exchanger (210); and
at least one cross member (216) rigidly fixing said first heat exchanger (210) to said second heat exchanger (212) to define said internal support structure (200).

3. The HVAC module (100) of claim 2 wherein said internal support structure (200) includes indexing features (218) to locate and fix said contoured panels (112) into predetermined positions onto said internal support structure (200).

4. The HVAC module (100) of claim 2 wherein:
at least one of said first and second heat exchangers (210, 212) includes protruding tabs (218);
at least one of said contoured panels (112) includes means to engage said protruding tabs (218) to locate and fix said contoured panels (112) into a predetermined position.

5. The HVAC module (100) of claim 2 wherein said HVAC module (100) includes an air valve module (214) fixably engaged to said first heat exchanger (210) and said second heat exchanger (212), such that said air valve module (214) functions as a cross member (216) to increase the torsional rigidity of said internal support structure (200).

6. The HVAC module (100) of claim 5, wherein adjacent contoured panels (112) are integrally connected by living hinges, thereby enabling the contoured panels (112) to be folded and repositioned in adjacent contact with one another to form said module housing (116).

7. The HVAC module (100) of claim 6, wherein said contoured panels (112) cooperate with said internal support structure (200) to define an air inlet (122), internal air passageways (118), and at least one mixing chamber (120).

8. The HVAC module (100) of claim 6, wherein said contoured panels (112) cooperate with said internal support structure (200) and air valve module (214) to define an air inlet (122), internal air passageways (118), at least one mixing chamber (120), and an air outlet (124).

9. The HVAC module (100) of claim 6, wherein said contoured panels (112) are formed form a sheet of light weight polymer foam material.

10. The HVAC module (100) of claim 9, wherein said contoured panels (112) are affixed to said internal support structure (200) by riveting.

11. The HVAC module (100) of claim 9, wherein said contoured panels (112) are affixed to said internal support structure (200) by gluing.

## Patentansprüche

1. Heizungs-, Lüftungs- und Klimatisierungsmodul (HLK) (100), umfassend:
ein Modulgehäuse (116), definiert von einer vorgeformten Materialbahn (110), die eine Vielzahl konturierter Platten (112) aufweist, die in einem vorgegebenen Muster konfiguriert sind, wobei diese konturierten Platten (112) entlang angrenzender Kanten (136) gefaltet sind,
**dadurch gekennzeichnet, dass**
das HLK-Modul (100) weiter eine interne Stützstruktur (200) umfasst, auf der diese konturierten Platten (112) befestigt sind.

2. HKL-Modul (100) nach Anspruch 1, wobei diese interne Stützstruktur (200) umfasst:
einen ersten Wärmetauscher (210);
einen zweiten Wärmetauscher (212), der von dem ersten Wärmetauscher (210) beabstandet ist; und
mindestens einen Querträger (216), der diesen ersten Wärmetauscher (210) mit diesem zweiten Wärmetauscher (212) starr fixiert, um diese interne Stützstruktur (200) zu definieren.

3. HKL-Modul (100) nach Anspruch 2, wobei diese interne Stützstruktur (200) indexierende Merkmale (218) beinhaltet, um diese konturierten Platten (112) in vorgegebenen Positionen auf dieser internen Stützstruktur (200) zu lokalisieren und zu fixieren.

4. HKL-Modul (100) nach Anspruch 2, wobei:
mindestens einer dieser ersten und zweiten Wärmetauscher (210, 212) vorstehende Laschen (218) beinhaltet;
mindestens eine dieser konturierten Platten (112) Mittel zu dem Einrasten dieser vorstehenden Laschen (218) beinhaltet, um diese konturierten Platten (112) in eine vorgegebene Position zu lokalisieren und zu fixieren.

5. HKL-Modul (100) nach Anspruch 2, wobei dieses HKL-Modul (100) ein Luftventilmodul (214) beinhaltet, das fixierbar an diesem ersten Wärmetauscher (210) und diesem zweiten Wärmetauscher (212) eingerastet ist, sodass dieses Luftventilmodul (214) als ein Querträger (216) fungiert, um die Torsionssteifigkeit dieser internen Stützstruktur (200) zu erhöhen.

6. HKL-Modul (100) nach Anspruch 5, wobei angrenzende konturierte Platten (112) integral durch aktive Gelenke verbunden sind, wodurch ermöglicht wird, dass die konturierten Platten (112) gefaltet und in angrenzenden Kontakt miteinander neu positioniert werden, um dieses Modulgehäuse (116) zu bilden.

7. HKL-Modul (100) nach Anspruch 6, wobei diese konturierten Platten (112) mit dieser internen Stützstruktur (200) zusammenarbeiten, um einen Lufteinlass (122), interne Luftkanäle (118) und mindestens einen Mischraum (120) zu definieren.

8. HKL-Modul (100) nach Anspruch 6, wobei diese konturierten Platten (112) mit dieser internen Stützstruktur (200) und dem Luftventilmodul (214) zusammenarbeiten, um einen Lufteinlass (122), interne Luftkanäle (118), mindestens einen Mischraum (120) und einen Luftauslass (124) zu definieren.

9. HKL-Modul (100) nach Anspruch 6, wobei diese konturierten Platten (112) aus einer Bahn leichten Polymerschaummaterials gebildet sind.

10. HKL-Modul (100) nach Anspruch 9, wobei diese konturierten Platten (112) durch Vernieten an dieser internen Stützstruktur (200) angebracht sind.

11. HKL-Modul (100) nach Anspruch 9, wobei diese konturierten Platten (112) durch Kleben an dieser internen Stützstruktur (200) angebracht sind.

## Revendications

1. Module de chauffage, ventilation et climatisation (HVAC) (100) comprenant :
un logement de module (116) défini par une feuille préformée (110) de matériau présentant une pluralité de panneaux à contour (112) configurés dans un motif prédéterminé, dans lequel lesdits panneaux à contour (112) sont pliés le long de bords adjacents (136),
**caractérisé en ce que**
le module HVAC (100) comprend en outre une structure de support interne (200) sur laquelle lesdits panneaux à contour (112) sont attachés.

2. Module HVAC (100) selon la revendication 1, dans lequel ladite structure de support interne (200) comprend :
un premier échangeur de chaleur (210) ;
un second échangeur de chaleur (212) espacé du premier échangeur de chaleur (210) ; et
au moins un élément transversal (216) fixant rigidement ledit premier échangeur de chaleur (210) audit second échangeur de chaleur (212) pour définir ladite structure de support interne (200).

3. Module HVAC (100) selon la revendication 2, dans lequel ladite structure de support interne (200) inclut des éléments d'indexation (218) pour positionner et fixer lesdits panneaux à contour (112) dans des positions prédéterminées sur ladite structure de support interne (200).

4. Module HVAC (100) selon la revendication 2, dans lequel :
au moins un desdits premier et second échangeurs de chaleur (210, 212) inclut des pattes en saillie (218) ;
au moins un desdits panneaux à contour (112) inclut des moyens pour mettre en prise lesdites pattes en saillie (218) pour positionner et fixer lesdits panneaux à contour (112) dans une position prédéterminée.

5. Module HVAC (100) selon la revendication 2, dans lequel ledit module HVAC (100) inclut un module de vanne d'air (214) amené en prise fixement dans ledit premier échangeur de chaleur (210) et ledit second échangeur de chaleur (212) de sorte que ledit module de vanne d'air (214) fonctionne comme un élément transversal (216) pour augmenter la rigidité de torsion de ladite structure de support interne (200).

6. Module HVAC (100) selon la revendication 5, dans lequel des panneaux à contour adjacents (112) sont raccordés intégralement par des articulations actives, permettant ainsi aux panneaux à contour (112) d'être pliés et repositionnés en contact adjacent les uns avec les autres pour former ledit logement de module (116).

7. Module HVAC (100) selon la revendication 6, dans lequel lesdits panneaux à contour (112) coopèrent avec ladite structure de support interne (200) pour définir une entrée d'air (122), des passages d'air internes (118) et au moins une chambre de mélange (120).

8. Module HVAC (100) selon la revendication 6, dans lequel lesdits panneaux à contour (112) coopèrent avec ladite structure de support interne (200) et ledit module de vanne d'air (214) pour définir une entrée d'air (122), des passages d'air internes (118), au moins une chambre de mélange (120) et une sortie d'air (124).

9. Module HVAC (100) selon la revendication 6, dans lequel lesdits panneaux à contour (112) sont formés en une feuille de matériau en mousse de polymère à poids léger.

10. Module HVAC (100) selon la revendication 9, dans lequel lesdits panneaux à contour (112) sont fixés à ladite structure de support interne (200) par rivetage.

11. Module HVAC (100) selon la revendication 9, dans lequel lesdits panneaux à contour (112) sont fixés à ladite structure de support interne (200) par collage.
